(19) Europäisches Patentamt
European Patent Office
Office européen des brevets

(11) **EP 2 277 087 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(21) Anmeldenummer: **09741752.1**

(22) Anmeldetag: **30.04.2009**

(51) Int Cl.:
***G05B 23/02*** *(2006.01)*

(86) Internationale Anmeldenummer:
**PCT/DE2009/000631**

(87) Internationale Veröffentlichungsnummer:
**WO 2009/135479 (12.11.2009 Gazette 2009/46)**

(54) **VORRICHTUNG UND VERFAHREN ZUR ÜBERWACHUNG EINER GASTURBINE**

DEVICE AND METHOD FOR MONITORING A GAS TURBINE

PROCÉDÉ ET DISPOSITIF DE SURVEILLANCE D'UNE TURBINE À GAZ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **08.05.2008 DE 102008022459**

(43) Veröffentlichungstag der Anmeldung:
**26.01.2011 Patentblatt 2011/04**

(73) Patentinhaber: **MTU Aero Engines AG 80995 München (DE)**

(72) Erfinder:
• **LIPOWSKY, Holger 70567 Stuttgart (DE)**
• **STAUDACHER, Stephan 75233 Tiefenbronn (DE)**

(56) Entgegenhaltungen:
**EP-A1- 1 777 157     WO-A1-2007/060446
FR-A1- 2 883 330**

EP 2 277 087 B1

## Beschreibung

Die vorliegende Erfindung bezieht sich auf eine Vorrichtung und ein Verfahren zur Überwachung einer Gasturbine.

Der Zustand von Gasturbinen verschlechtert sich über die Betriebsdauer hinweg. Dabei kann sich der Zustand aufgrund von Alterungserscheinungen oder aufgrund von Einzelereignissen verschlechtern. Beispiele für Alterungserscheinungen sind Erosion oder Korrosion. Ein Einzelereignis kann eine Beschädigung durch eingesaugte Fremdteile sein. Während Alterungserscheinungen eine graduelle Verschlechterung aller Komponenten der Gasturbine, unter Umständen in unterschiedlicher Ausprägung, zur Folge haben, resultieren Einzelereignisse in sprunghaften Veränderungen der Leistungsparameter einiger weniger Komponenten.

Zur Überwachung von Gasturbinen kommen Leistungsrechnungsprogramme zum Einsatz, die das Betriebsverhalten der Gasturbine im unverschlechterten Zustand simulieren. Hierdurch ist es möglich, für jeden Betriebspunkt Erwartungswerte für die entsprechenden Messgrößen zu ermitteln. Die Abweichungen zwischen Erwartungswerten und Messwerten, Residuen genannt, stellen die Grundlage für die Überwachung der Gasturbine dar.

Im Falle von Einzelereignissen sind in den Residuen sprunghafte Veränderungen zu erwarten. Diese Veränderungen so zeitnah wie möglich zu erkennen ist Aufgabe der Detektion. Im Falle einer positiven Detektion besteht die Aufgabe der Diagnose in der Bestimmung der betroffenen Komponenten. Bei positiver sowie negativer Detektion besteht die Aufgabe der Prognose in der Vorhersage des weiteren Verlaufes der entsprechenden Parameter, um eventuelle Grenzwertüberschreitungen zu verhindern. Insbesondere im Hinblick auf eine Überwachung einer Vielzahl baugleicher Gasturbinen, z.B. Triebwerksflotten, ist es von entscheidender Bedeutung, die Aufgabe der Detektion zu automatisieren.

Die traditionell vorherrschende Wartungsphilosophie für Gasturbinen besteht in der Wartung nach festgelegten Zyklen mit gleichzeitiger Überwachung globaler Parameter, wie z.B. der Turbinenaustrittstemperatur oder des spezifischen Brennstoffverbrauchs. Diese globalen Parameter werden lediglich im Hinblick auf die Überschreitung festgelegter Grenzwerte überwacht.

Seit den 1990er Jahren ist ein Wandel der Wartungsphilosophie von der zeitbezogenen zur zustandsbezogenen Wartung erkennbar. Die zustandsbezogene Wartung setzt eine genaue Kenntnis des Zustandes der jeweiligen Gasturbine voraus, die durch so genannte Engine Health Monitoring Systeme (EHM Systeme) bereitgestellt werden soll. US 5,105,372 beschreibt ein derartiges System, das auf der Anwendung eines Kalman Filters basiert. Die Aufgabe der Detektion wird in diesem System nicht explizit beschrieben, die Diagnose wird unabhängig von einer sprunghaften Veränderung der Residuen durchgeführt. Es sind keine Detektionsfunktionen erläutert. Die Aufgabe der Prognose wird mit Hilfe eines Kalman Filters durchgeführt. Die Prognosefunktion ist auf die Prognose linearer Trends beschränkt und liefert keine Informationen über einen Vertrauensbereich der Vorhersage.

Im Falle der Überwachung statisch definierter Grenzwerte ist eine Fehlfunktion erst zu erkennen, wenn die Veränderung des Betriebsverhaltens ein gewisses Ausmaß angenommen hat. Es sind keine Detektions- oder Prognosefunktionen vorhanden.

Des Weiteren finden vermehrt Verfahren der "künstlichen Intelligenz" Anwendung, wie z.B. Neuronale Netze, Fuzzy Logic, Genetische Algorithmen. Das in Therkorn: Remote Monitoring & Diagnostic for Combined-Cycle Power Plants beschriebene System sucht beispielsweise mit Hilfe entsprechend trainierter Neuronaler Netze nach bekannten Mustern in Residuen und abgeleiteten Größen und löst bei positiver Mustererkennung einen Detektionsalarm aus.

Alle auf Neuronalen Netzen basierende Systeme müssen auf bekannte Fehlerfälle und für jeden einzelnen Gasturbinentyp speziell trainiert und konfiguriert werden.

Es ist die Aufgabe der vorliegenden Erfindung eine verbesserte Vorrichtung und ein verbessertes Verfahren zur Überwachung einer Gasturbine zu schaffen.

Diese Aufgabe wird durch eine Vorrichtung gemäß Anspruch 1 und ein Verfahren gemäß Anspruch 13 gelöst.

Der erfindungsgemäße Ansatz eignet sich zur Detektion und Prognose im Rahmen der Zustandsüberwachung von Gasturbinen. Dabei liegt der vorliegenden Erfindung die Erkenntnis zugrunde, dass sich die Methode der Bayesischen Vorhersage vorteilhaft im Bereich der Gasturbinenüberwachung anwenden lässt. Insbesondere lässt sich die Aufgabe der Detektion durch die Anwendung der Methode der Bayesischen Vorhersage lösen.

Die vorliegende Erfindung schafft eine Vorrichtung zur Überwachung einer Gasturbine, mit folgenden Merkmalen:

einer Empfangseinrichtung zum Empfangen von Zustandswerten der Gasturbine; und

einer Auswerteeinrichtung, die ausgebildet ist, um basierend auf der Methode der bayesischen Vorhersage, eine Zustandsinformation aus den Zustandswerten der Gasturbine zu ermitteln.

Die vorliegende Erfindung schafft ferner ein Verfahren zur Überwachung einer Gasturbine, das die folgenden Schritte aufweist:

Empfangen von Zustandswerten der Gasturbine; und

Ermitteln einer Zustandsinformation der Gasturbine aus den Zustandswerten, basierend auf der Methode der bayesischen Vorhersage.

Gemäß einer Ausgestaltung kann es sich bei den Zustandswerten um Residuen handeln. Die Residuen können in ihren zeitlichen Verläufen betrachtet und durch so genannte Dynamische Lineare Modelle (DLM) beschrieben werden. Dabei können Dynamische Lineare Modelle eingesetzt werden, wie sie bei Pole, West, Harrison: Applied Bayesian Forecasting and Time Seris Analysis, Chapman & Hall, 1994, oder bei West, Harrison: Bayesian Forecasting and Dynamic Models, Second Edition, Springer, 1997 oder bei West, Harrison: Monitoring and Adaptation in Bayesian Forecasting Models, Journal of the American Statistical Association, September 1986, Vol. 81, No. 395, Theory and Methods, 1986 beschrieben sind. Dadurch ist es möglich, zu jedem Zeitpunkt eine erwartete Wahrscheinlichkeitsdichte für den nächsten Zeitschritt anzugeben.

Gemäß einer Ausgestaltung kann mit Hilfe von so genannten Bayes-Faktoren eine Erkennung sprunghafter Veränderungen in den Residuen erreicht werden. Dazu kann die Wahrscheinlichkeitsdichte eines aktuellen Modells zu jedem Zeitpunkt mit der Wahrscheinlichkeitsdichte eines alternativen Modells verglichen werden, dessen Mittelwert gegenüber dem aktuellen Modell um einen bestimmten Betrag verschoben ist. Um die Genauigkeit des Verfahrens optimal zu gestalten und gleichzeitig die Anzahl der Fehlalarme zu minimieren, erfolgt erfindungsgemäß eine Kette von logischen Abfragen, die sich unter anderem der Berechnung von kumulativen Bayes-Faktoren und den zugehörigen Lauflängen bedient. Die Kette der logischen Abfragen für die Erkennung sprunghafter Veranderungen in den Residuen kann basierend auf der bei West, Harrison: Bayesian Forecasting and Dynamic Models, Second Edition, Springer, 1997 beschriebenen Theorie entwickelt werden.

FR 2883330 beschreibt eine Vorrichtung zur Überwachung einen Gasturbine.

Bevorzugte Ausführungsbeispiele der vorliegenden Erfindung werden nachfolgend Bezug nehmend auf die beiliegenden Zeichnungen näher erläutert. Es zeigen:

Fig. 1        eine schematische Darstellung einer erfindungsgemäßen Vorrichtung zur Überwachung einer Gasturbine;

Fig. 2        eine Darstellung einer Zerlegung eines Prozesses;

Fig. 3        eine Wahrscheinlichkeitsdichtefunktion;

Fig. 4        einen Algorithmus zur Ausreißererkennung;

Fig. 5        einen Zusammenhang zwischen Modellen und dem Bayes Faktor

Fig. 6 bis 13        einen zeitlichen Verlauf der Residuen, des Bayes Faktor $H_t$, sowie der Werte L(t) und I(t);

Fig. 14        einen Zusammenhang zwischen weiteren Modellen und dem Bayes Faktor; und

Fig. 15        einen Zusammenhang zwischen weiteren Modellen und dem Bayes Faktor.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

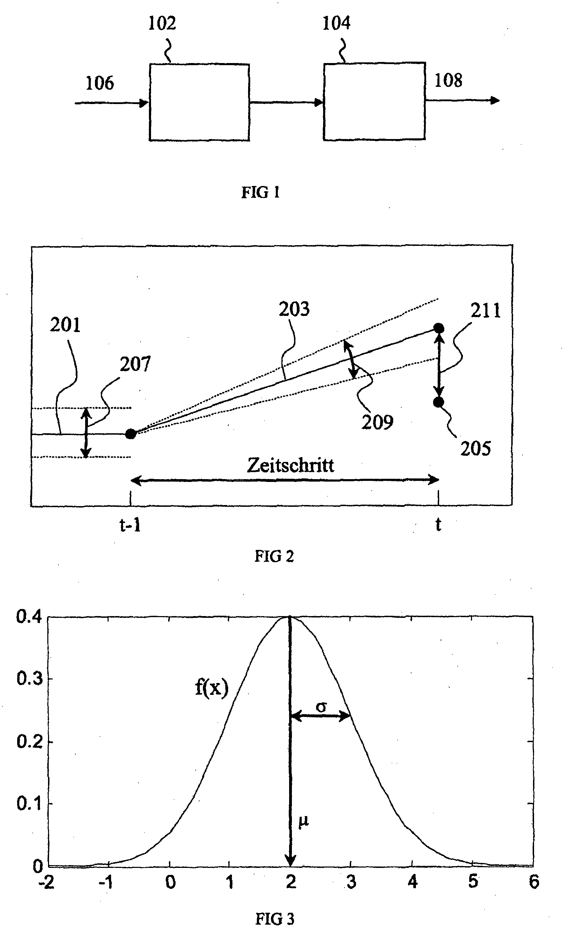

Fig. 1 zeigt eine Vorrichtung zur Überwachung einer Gasturbine, gemäß einem Ausführungsbeispiel der vorliegenden Erfindung. Die Vorrichtung weist eine Empfangseinrichtung 102 und eine Auswerteeinrichtung 104 auf. Die Empfangseinrichtung 102 ist ausgebildet, um Zustandswerte 106 der Gasturbine zu empfangen und an die Auswerteeinrichtung 104 bereitzustellen. Die Auswerteeinrichtung 104 ist ausgebildet, um aus den Zustandswerten 106 eine Zustandsinformation 108 der Gasturbine zu ermitteln. Insbesondere ist die Auswerteeinrichtung 104 ausgebildet, um die Zustandsinformation 108 basierend auf der Methode der bayesischen Vorhersage zu ermitteln. Die Auswerteeinrichtung 104 kann ausgebildet sein, um die Zustandsinformation 108 anzuzeigen oder beispielsweise zur Weiterverarbeitung bereitzustellen.

Bei den Zustandswerten 106 kann es sich um Messwerte der Gasturbine handeln. Ferner kann es sich bei den Zustandswerten um Residuen handeln, die jeweils eine Abweichung eines Messwertes der Gasturbine von einem, dem Messwert zugeordneten Erwartungswert bestimmen.

Die Zustandsinformation 108 kann bei der Detektion und/oder der Prognose im Rahmen der Zustandsüberwachung oder des Betriebsverhaltens der Gasturbine eingesetzt werden. Beispielsweise kann die Auswerteeinrichtung 104 im Rahmen der Detektion ausgebildet sein, um eine sprunghafte Veränderung der Zustandswerte 106 als Zustandsinformation 108 zu ermitteln. Ferner kann die Auswerteeinrichtung ausgebildet sein, um eine Prognose über einen zukünftigen Verlauf der Zustandswerte als Zustandsinformation 108 zu ermitteln.

Gemäß einem Ausführungsbeispiel kann die Auswerteeinrichtung 104 ausgebildet sein, um die Zustandswerte 106 durch mindestens ein Dynamisches Lineares Modell zu beschreiben, um die Zustandsinformation 108 zu ermitteln. Das Dynamische Lineare Modell kann ausgebildet sein, um mindestens einen linearen Trend der Zustandswerte 106 zu beschreiben. Alternativ oder zusätzlich kann das Dynamische Lineare Modell ausgebildet sein, um mindestens einen polynomischen Trend höherer Ordnung der Zustandswerte 104 zu beschreiben.

Ferner kann die Auswerteeinrichtung 104 ausgebildet sein, um Wahrscheinlichkeitsdichten eines aktuellen Dynamischen Linearen Modells sowie mindestens eines alternativen Dynamischen Linearen Modells zu bestimmen. Das alternative Modell unterscheidet sich vom aktuellen Modell darin, dass sein Mittelwert um einen bestimmten Wert gegenüber einem Mittelwert des aktuellen Modells verschoben ist. Zur Ermittlung der Zustandsinformation 108 kann die Auswerteeinrichtung 104 ausgebildet sein, um die Wahrscheinlichkeitsdichte des aktuellen Modells mit der Wahrscheinlichkeitsdichte des alternativen Modells zu vergleichen.

Ferner kann die Auswerteeinrichtung 104 ausgebildet sein, um die Zustandsinformation 108 auf der Grundlage von Bayes Faktoren zu ermitteln. Dazu kann die Auswerteeinrichtung 104 ausgebildet sein, die Bayes-Faktoren aus der Wahrscheinlichkeitsdichte des aktuellen Dynamischen Linearen Modells und der Wahrscheinlichkeitsdichte des alternativen Dynamischen Linearen Modells zu bestimmen. Des Weiteren kann die Auswerteeinrichtung 104 ausgebildet sein, um die Zustandsinformation 108 durch die Berechnung kumulativer Bayes-Faktoren zu ermitteln.

Anhand der folgenden Figuren, Funktionen und Detektionsalgorithmen wird ein fortschrittliches Monitoringsystem für Gasturbinen beschrieben. Dabei wird die Aufgabe der Detektion durch die Anwendung der Methode der Bayesischen Vorhersage (engl. Bayesian Forecating) gelöst.

Die Idee Dynamischer Linearer Modelle (DLM) besteht in der Zerlegung des zu beobachtenden Prozesses in mehrere Komponenten. Bei der Verwendung von DLM zweiter Ordnung sind dies die Komponenten "Wert" und "Gradient", bei der Verwendung von DLM dritter Ordnung kommt noch die Komponente "Krümmung" hinzu. Bei der Verwendung von DLM zweiter Ordnung gilt:

Messung     $Y_t = \mu_t + \upsilon_t$
Wert        $\mu_t = \mu_{t-1} + \beta_{t-1} + \omega_{1t}$
Gradient    $\beta_t = \beta_{t-1} + \omega_{2t}$

wobei $Y_t$ den Messwert des zu beobachtenden Prozesses darstellt, $\mu_t$ dessen Mittelwert und $\beta_t$ dessen lokalen Gradienten. Der Messwert $Y_t$ setzt sich dabei aus $\mu_t$ und einer Varianz $\upsilon_t$ zusammen, die Unsicherheiten in der Messung und Modellungenauigkeiten repräsentiert. Der Wert des zu beobachtenden Prozesses $\mu_t$ wiederum setzt sich aus dem Prozesswert zum vorherigen Zeitschritt $\mu_{t-1}$, dem Gradienten des vorherigen Zeitschrittes $\beta_{t-1}$ und einer Wertvarianz $\omega_{1t}$ zusammen, die Veränderungen im Prozesswert zwischen zwei Zeitschritten widerspiegelt. Der Gradient $\beta_t$ schließlich entspricht seinem Wert zum vorherigen Zeitschritt $\beta_{t-1}$ und einer Gradientenvarianz $\omega_{2t}$, die Veränderungen des Gradienten zwischen zwei Zeitschritten darstellt.

In Matrixschreibweise ergibt sich die Darstellung:

$$Y_t = \begin{pmatrix} 1 \\ 0 \end{pmatrix}' \cdot \begin{pmatrix} \mu \\ \beta \end{pmatrix}_t + \upsilon_t$$

$$\begin{pmatrix} \mu \\ \beta \end{pmatrix}_t = \begin{pmatrix} 1 & 1 \\ 0 & 1 \end{pmatrix} \cdot \begin{pmatrix} \mu \\ \beta \end{pmatrix}_{t-1} + \begin{pmatrix} \omega_1 & 0 \\ 0 & \omega_2 \end{pmatrix}_t$$

oder kurz:

$$Y_t = F_t' \cdot \Theta_t + \upsilon_t$$
$$\Theta_t = G_t \cdot \Theta_{t-1} + W_t \qquad \text{mit} \quad \Theta = \begin{pmatrix} \mu \\ \beta \end{pmatrix}, F = \begin{pmatrix} 1 \\ 0 \end{pmatrix}, G = \begin{pmatrix} 1 & 1 \\ 0 & 1 \end{pmatrix}, W = \begin{pmatrix} \omega_1 & 0 \\ 0 & \omega_2 \end{pmatrix}$$

Fig. 2 stellt die Zerlegung eines Prozesses entsprechend eines DLM zweiter Ordnung dar. 201 bezeichnet die Komponente "Wert" ($\square_t$), 203 die Komponente "Gradient" ($\square_t$), 205 die Messung $Y_t$, 207 die Wertvarianz $\square_{1t}$, 209 die Gradientenvarianz $\square_{2t}$ und 211 die Messvarianz $\square_t$. In Bezug auf die Anwendung von DLM auf die Diagnose von Gasturbinen sind die zu beobachtenden Prozesse die zeitlichen Verläufe der Residuen.

Ein wesentliches Merkmal der Methode der Bayesischen Vorhersage ist die Beschreibung des beobachteten Prozesses mit Hilfe von Wahrscheinlichkeitsdichtefunktionen.

Fig. 3 zeigt die Wahrscheinlichkeitsdichtefunktion

$$f(x) = \frac{2}{\sigma\sqrt{2\pi}} \cdot \exp\left(-\frac{1}{2} \cdot \left(\frac{x-\mu}{\sigma}\right)^2\right)$$

wobei $\sigma$ die Standardabweichung und $\mu$ der Mittelwerte ist.

Im folgenden wird eine verkürzte Form zur Darstellung von Parametern verwendet, die durch Wahrscheinlichkeitsdichtefunktionen beschrieben werden. Dabei bezeichnet $\theta t$ die Dichtefunktion des Parameters und $Dt$ die Gesamtheit aller Parameter von $Y1$ bis $Yt$. Die Notation ist wie folgt zu lesen: Die Dichtefunktion $\theta t$ des Parameters ist bei Kenntnis der Parametergesamtheit $Dt$ normalverteilt mit dem Mittelwert $mt$ und der Varianz $Ct$.

Für die Informationsgleichungen gilt:

$$\left(\Theta_{t-1} \mid D_{t-1}\right) \sim N\left[m_{t-1}, C_{t-1}\right]$$

$$\left(\Theta_t \mid D_{t-1}\right) \sim N\left[a_t, R_t\right]$$

Für die 1-step Forecast Gleichung gilt:

$$\left(Y_t \mid D_{t-1}\right) \sim N\left[f_t, Q_t\right]$$

Für die Update Gleichungen gilt:

$$\left(\Theta_t \mid D_t\right) \sim N\left[m_t, C_t\right]$$

Für die k-step Forecast Gleichungen gilt:

$$\left(\Theta_{t+k} \mid D_t\right) \sim N\left[a_t(k), R_t(k)\right]$$

$$\left(Y_{t+k} \mid D_t\right) \sim N\left[f_t(k), Q_t(k)\right]$$

Die Mittelwerte m, a und f sowie die zugehörigen Varianzen C, R und Q berechnen sich jeweils entsprechend Pole, West, Harrison: Applied Bayesian Forecasting and Time Series Analysis, Chapman & Hall, 1994. Die Informationsgleichungen beschreiben die Berechnung von "Wert" und "Gradient" zum Zeitpunkt t bei Kenntnis der Messungen bis zum Zeitpunkt t-1 (apriori). Die 1-step Forecast Gleichung liefert eine Vorhersage für den Messwert zum Zeitpunkt t bei Kenntnis der Messungen bis zum Zeitpunkt t-1. Die Update Gleichungen berechnen die Komponenten "Wert" und "Gradient" nach der Messung zum Zeitpunkt t (aposteriori). Die k-Step Forecast Gleichungen schließlich liefern eine Vorhersage für Wert, Gradient und Messwert für die nächsten k Zeitschritte.

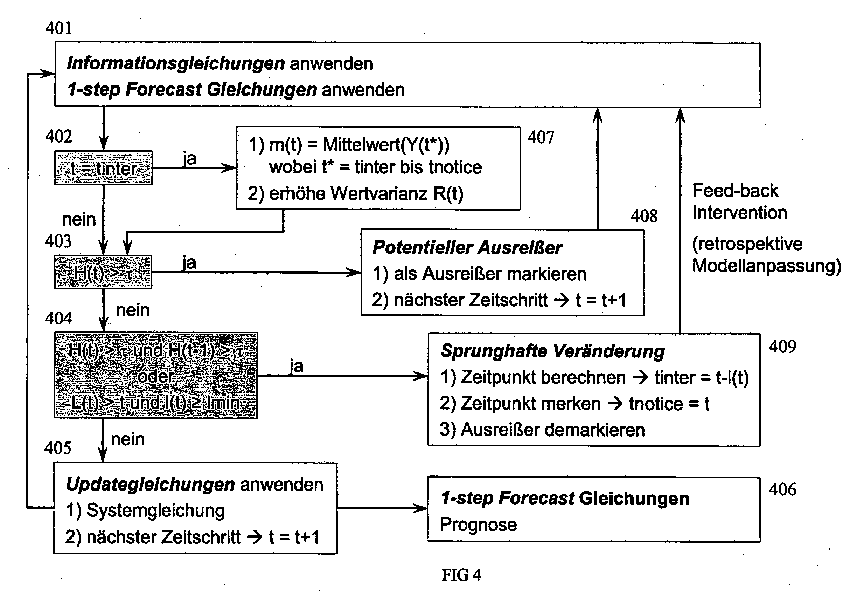

Fig. 4 zeigt den Algorithmus zur Ausreißererkennung, Intervention und Prognose.

Allgemein beschreibt der Bayes Faktor das Verhältnis zwischen den Wahrscheinlichkeitsdichtefunktionen des aktuellen und des alternativen Modells. Im Falle der verwendeten Normalverteilung lässt sich der Bayes Faktor darstellen als

$$H_t = \exp\left(\frac{2h \cdot (Y_t - f_t) - h^2}{2 \cdot Q_t}\right)$$

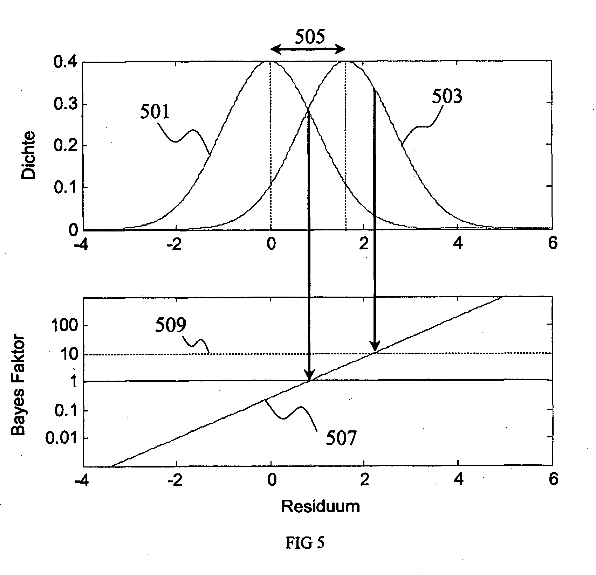

Fig. 5 zeigt den Zusammenhang zwischen den Wahrscheinlichkeitsverteilungen und dem Bayes Faktor. 501 bezeichnet die Wahrscheinlichkeitsverteilung des aktuellen Modells, 503 die des alternativen Modells, 505 den Versatz h der Mittelwerte der beiden Verteilungen und 507 den Verlauf des Bayes Faktors. Im gezeigten Beispiel beträgt der h=1,645. Entscheidend ist, dass der Bayes Faktor eine monoton steigende Funktion darstellt, d.h. je größer das Residuum, desto größer der Bayes Faktor. Hierdurch ist ein Schwellwert 509 definierbar, bei dessen Überschreitung ein Messwert als potentieller Ausreißer oder sprunghafte Veränderung erkannt werden kann.

Des werden kumulative Bayes Faktoren kommen zum Einsatz, um die Frage zu beantworten, ob mehrere aufeinander folgende Messwerte eine sprunghafte Veränderung der Residuen anzeigen. Für den kumulativen Bayes Faktor L(t) gilt:

$$H_t(k) = \prod_{t-r+1}^{t} H_t \quad \text{mit } r = 1, 2, ..., l_{max}$$

$$L_t = \max_{1 \le k \le r} H_t(k) \quad \text{mit } k = l_t$$

wobei Ht(k) das Produkt der letzten lmax Bayes Faktoren und lt die Lauflänge ist. Die Lauflänge lt wird so bestimmt, dass das Produkt der letzten lt Bayes Faktoren maximal wird. Dieses maximale Produkt entspricht dem kumulativen Bayes Faktor. Mit dieser Methode ist es möglich, sprunghafte Veränderungen zu erkennen, deren Größenordnung in der Nähe der Standardabweichung des zu beobachtenden Prozesses liegt. Wird auf die Anwendung kumulativer Bayes Faktoren verzichtet, liegt die Beobachtungsgrenze bei Vielfachen der Prozessstandardabweichung.

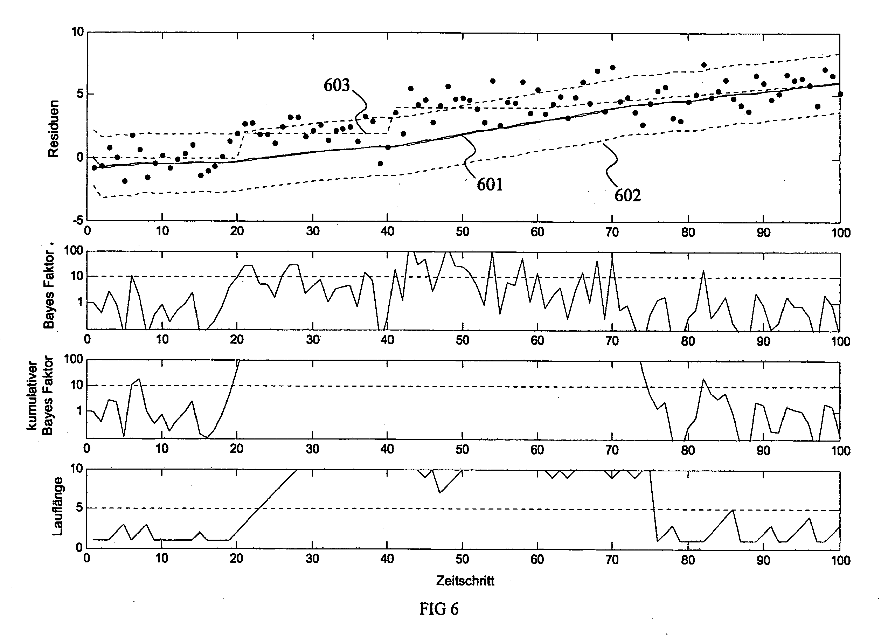

Fig. 6 zeigt einen zeitlichen Verlauf der Residuen, des Bayes Faktor $H_t$, des kumulativen Bayes Faktors L(t) sowie der Lauflänge l(t) über der Zeit t.

Das Bezugszeichen 601 bezeichnet den Mittelwert $\mu_t$ des aktuellen Modells und das Bezugszeichen 602 einen Vertrauensbereich. Im gezeigten Beispiel umfasst der Vertrauensbereich 97,56% aller Residuen. 603 bezeichnet den wahren Verlauf des beobachteten Prozesses. Es ist zu erkennen, dass dieser bei den Zeitschritten t=21 und t=41 jeweils eine sprunghafte Veränderung um +1 und ab dem Zeitschritt t=61 eine graduelle Veränderung von +0,05 pro Zeitschritt erfährt. Diesen wahren Prozessverlauf aus den Residuen zu rekonstruieren ist Kern der vorliegenden Erfindung.

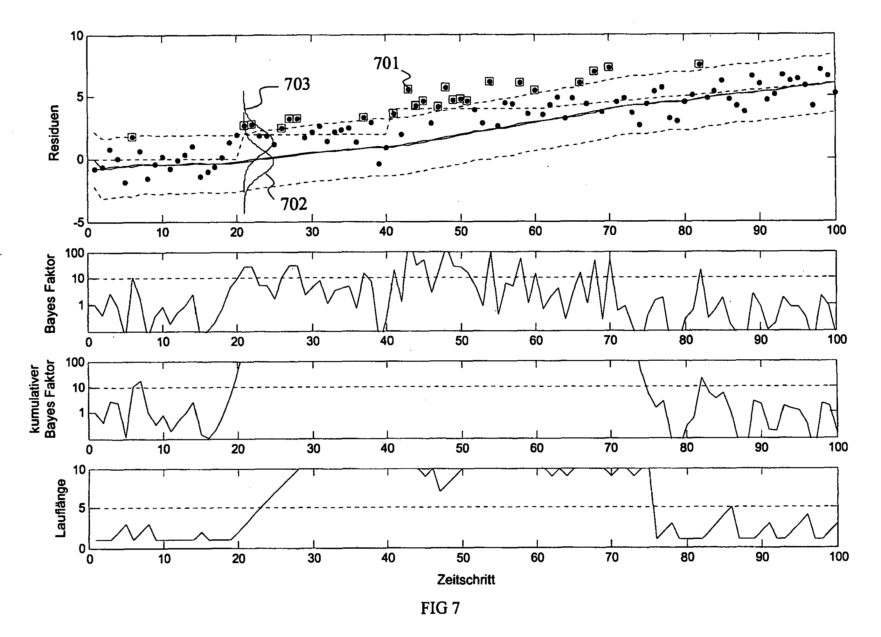

Fig. 7 zeigt den selben Prozessverlauf wie Fig. 6. Für die Bayes Faktoren wurde der Schwellwert $\tau$=10 definiert, bei dessen Überschreitung die entsprechenden Residuen als potentielle Ausreißer 701 markiert wurden. 702 bezeichnet die Wahrscheinlichkeitsdichtefunktion des aktuellen Modells, 703 die des alternativen Modells.

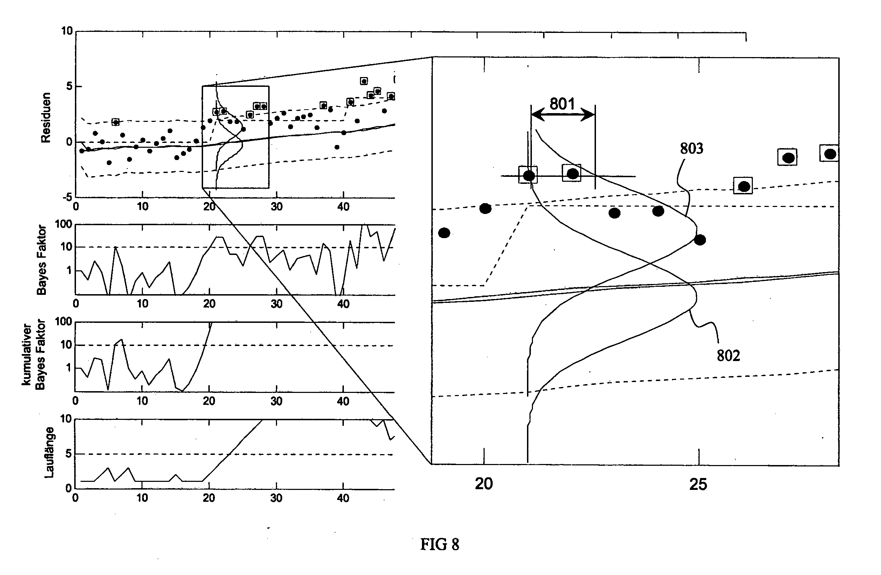

Fig. 8 zeigt einen Ausschnitt des in Fig. 7 gezeigten Verlaufs. 801 bezeichnet das Verhältnis der beiden Wahrscheinlichkeitsfunktionen 802 und 803. Es ist zu erkennen, dass das Residuum zum Zeitpunkt t=21 einen hohen Bayes Faktor ausweist, und daher entweder ein Ausreißer oder der Beginn einer sprunghaften Veränderung ist. Des Weiteren ist zu erkennen, dass bei den Zeitpunkten t=21 und t=22 jeweils Bayes Faktoren größer $\tau$ auftreten, was für eine große sprunghafte Veränderung spricht. In diesem Fall ist auch ohne Zuhilfenahme von kumulativen Bayes Faktoren und Lauflängen eine sprunghafte Veränderung festzustellen.

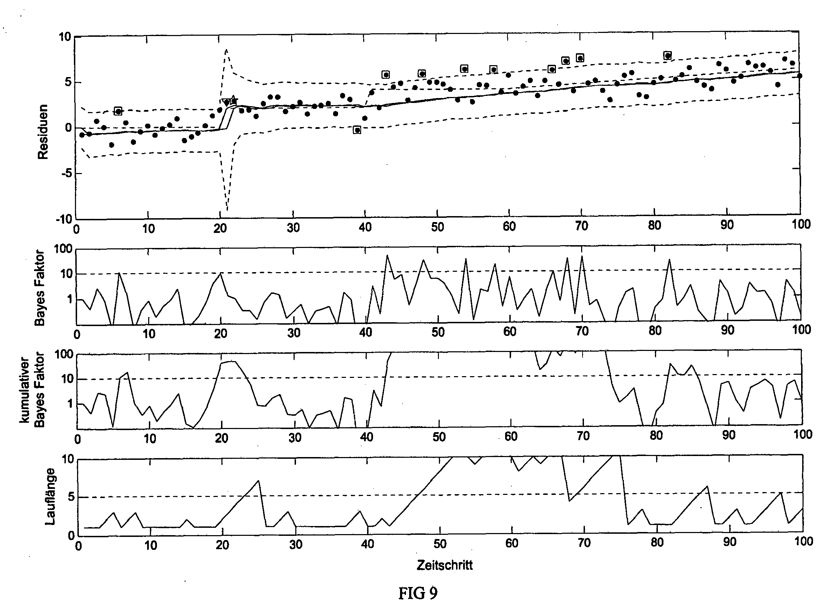

Fig. 9 zeigt den selben Prozessverlauf wie Fig. 7.

Zum Zeitpunkt t=21 wurde eine Modellanpassung durchgeführt, da bei zwei aufeinander folgenden Residuen Bayes Faktoren größer □ aufgetreten sind.

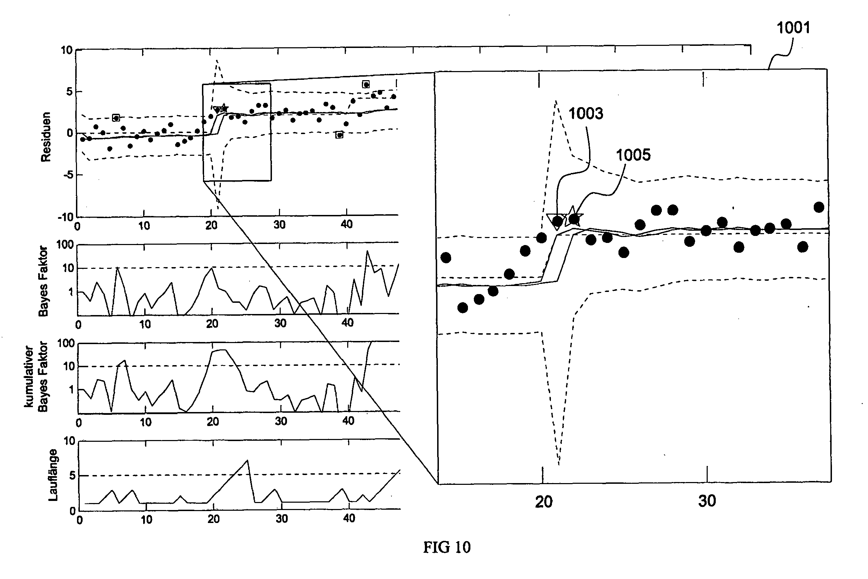

Fig. 10 zeigt einen Ausschnitt des in Fig. 9 gezeigten Verlaufs. Der vergrößerte Bildausschnitt 1001 zeigt ein Auftreten 1003 einer Änderung und eine Erkennung 1005 der Änderung. Die Änderung ist zum Zeitpunkt t=21 aufgetreten und wurde zum Zeitpunkt t=22 erkannt. In diesem Fall beträgt die Retrospektivität der Modellanpassung einen Zeitschritt.

Fig. 9 ist weiterhin zu entnehmen, dass zum Zeitschritt t=41 keine aufeinander folgenden Bayes Faktoren größer t auftreten. Um die bei t=41 auftretende Veränderung zu erkennen, bedarf es der Zuhilfenahme von kumulativen Bayes Faktoren und Lauflängen. Es ist zu erkennen, dass ab t=43 kumulative Bayes Faktoren größer □ auftreten. Es kann ein Schwellwert $l_{min}$ für die Lauflänge definiert werden, im gezeigten Beispiel wird $l_{min}$=5 gesetzt. Dieser Schwellwert wird bei t=48 erreicht. Zu diesem Zeitpunkt deuten 5 aufeinander folgende Punkte auf eine Veränderung der Residuen hin, die bei t=43 stattgefunden hat.

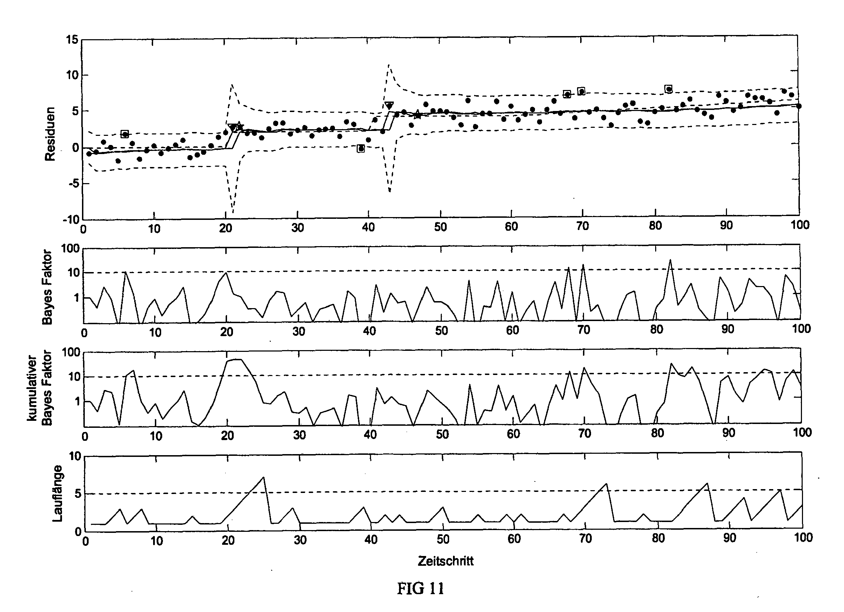

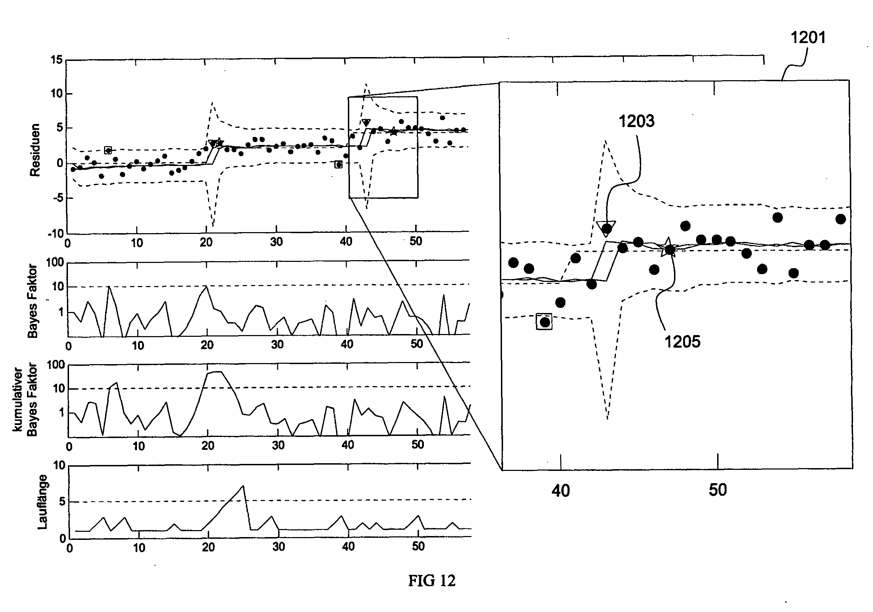

Fig. 11 zeigt den Prozessverlauf bei entsprechender Modellanpassung zum Zeitpunkt t=43. Fig. 12 zeigt einen Ausschnitt 1201. Es ist zu erkennen, dass die Veränderung bei t=48 erkannt wurde (bezeichnet durch 1205) und dass der Zeitpunkt der Veränderung zu t=43 berechnet wurde (bezeichnet durch 1203). Die Retrospektivität der Modellanpassung beträgt 4 Zeitschritte.

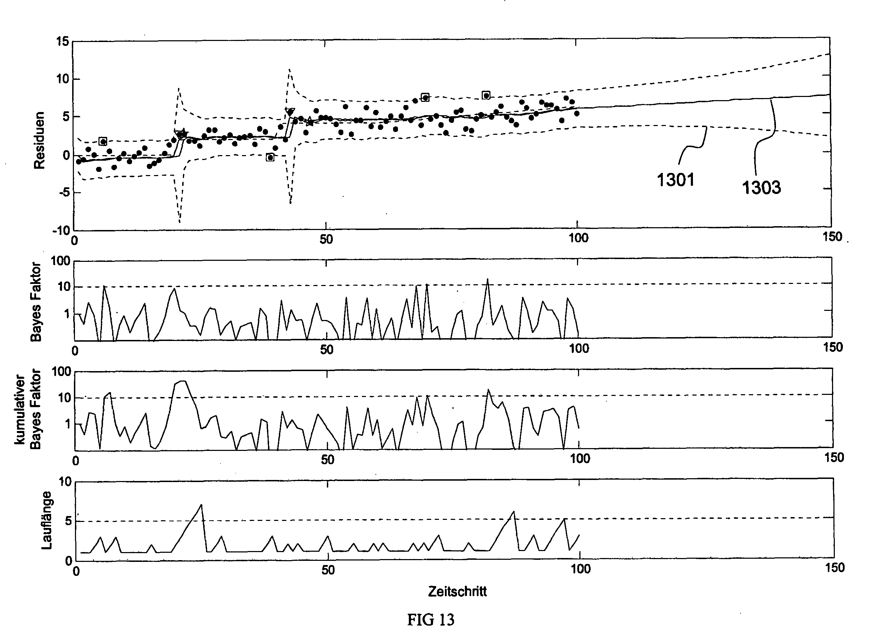

Fig. 13 zeigt eine Prognose des Prozesses. Es ist zu erkennen, dass die Prognose 1303 bei der Verwendung eines DLM zweiter Ordnung linear verläuft und dass die Ungenauigkeit 1301 über der Zeit ansteigt.

Bei einer Erweiterung der Methode für positive und negative Sprünge gilt für den Bayes Faktor $H_t$ bei Verwendung der gaußschen Normalverteilung

$$H_{1t} = \exp\left(\frac{2h\cdot(Y_t - f_t) - h^2}{2\cdot Q_t}\right)$$

$$H_{2t} = \exp\left(\frac{-2h\cdot(Y_t - f_t) - h^2}{2\cdot Q_t}\right)$$

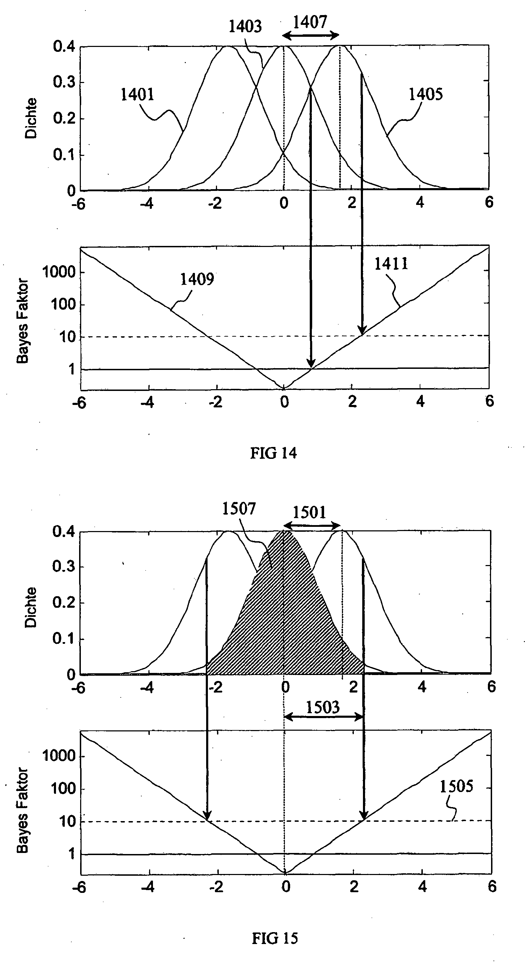

Fig. 14 zeigt den Zusammenhang zwischen Wahrscheinlichkeitsfunktionen und Bayes Faktoren bei der Erweiterung der Methode für positive und negative Sprünge. 1401 bezeichnet die Wahrscheinlichkeitsdichtefunktion des alternativen Modells "-h", 1403 die des aktuellen Modells und 1405 die des alternativen Modells "+h". 1407 bezeichnet den Versatz des Mittelwertes des alternativen Modells "+h" vom Mittelwert des aktuellen Modells. 1409 stellt den Verlauf des Bayes Faktors für negative Sprünge (Modell "-h") und 1411 für positive Sprünge (Modell "+h") dar.

Fig. 15 zeigt einen weiteren Zusammenhang zwischen den Wahrscheinlichkeitsdichten und den Bayes Faktoren. Entsprechend dem Versatz 1501 ergibt sich eine Breite der Verteilung des aktuellen Modells 1503, in der Bayes Faktoren kleiner dem Schwellwert 1505 auftreten. Mit Hilfe dieser Breite lässt sich die Größe des Vertrauensbereichs 1507 bestimmen. Im gezeigten Beispiel beträgt der Versatz h=1,645 und der Schwellwert □=10 was auf eine Breite der Verteilung von x=2,225 führt. Damit beträgt die Größe des Vertrauensbereiches 97,56%, d.h. 97,56% aller Residuen liegen statistisch gesehen innerhalb des Vertrauensbereiches 1507.

Fig. 4 zeigt zusammenfassend den Kern der Erfindung, den Algorithmus zur Ausreißererkennung, Intervention und Prognose.

In einem ersten Schritt 401 kann ein Auswerten der Informationsgleichungen und der 1-step Forecast Gleichungen erfolgen.

In einem zweiten Schritt 402 kann eine Überprüfung der Zeit t und insbesondere ein Vergleich der Zeit t mit einem Zeitpunkt tinter erfolgen. Wurde in einem vorherigen Durchlauf des Algorithmus eine sprunghafte Veränderung erkannt, so ist t=tinter und es kann nachfolgend ein siebter Schritt ausgeführt werden. Ist dies nicht der Fall, so kann ein dritter Schritt 403 ausgeführt werden.

In dem dritten Schritt 403 kann eine Überprüfung des Wertes H(t) und insbesondere ein Vergleich des Wertes H(t) mit dem Wert $\tau$ erfolgen. Wenn H(t)>$\tau$ ist, so kann nachfolgend ein achter Schritt 408 ausgeführt werden. Ist dies nicht der Fall, so kann ein vierter Schritt 404 ausgeführt werden.

In dem vierten Schritt 404 kann eine Überprüfung der Werte H(t), H(t-1), L(t) und l(t) erfolgen. Insbesondere kann ein Vergleich der Werte H(t) und H(t-1) mit dem Wert $\tau$, ein Vergleich des Wertes L(t) mit t und ein Vergleich des Wertes l(t) mit lmin erfolgen. Wenn H(t)>$\tau$ und H(t-1)>$\tau$ ist oder L(t)>t und l(t)$\geq$lmin ist, so kann nachfolgend ein neunter Schritt 409 ausgeführt werden. Ist dies nicht der Fall, so kann ein fünfter Schritt 405 ausgeführt werden.

In dem fünften Schritt 405 kann ein Anwenden der Updategleichungen erfolgen.

Nach dem fünften Schritt 405 kann sowohl der ersten Schritt 401 als auch ein sechster Schritt 406 ausgeführt werden.

In dem sechsten Schritt 406 kann ein Anwenden der Prognosegleichungen erfolgen.

In dem siebten Schritt 407, der auf den zweiten Schritt 402 folgen kann, kann ein Setzen des Mittelwerts m(t) des aktuellen Modells auf den Mittelwert der Residuen vom Zeitschritt t=tinter bis t= tnotice und ein Erhöhen der Wertvarianz R erfolgen. Nach dem siebten Schritt 407 kann der dritte Schritt 403 ausgeführt werden.

Der achte Schritt 408, der auf den dritten Schritt 403 folgen kann, ist auf potentielle Ausreißer gerichtet:

1) als Ausreißer markieren
2) nächster Zeitschritt -> t=t+1

Nach dem achten Schritt 408 kann der erste Schritt 401 ausgeführt werden.

Der neunte Schritt 409, der auf den vierten Schritt 404 folgen kann, ist auf eine sprunghafte Veränderung gerichtet:

1) Zeitpunkt berechnen -> tinter=t-l(t)
2) Zeitpunkt merken -> tnotice=t
3) Ausreißer demarkieren

Nach dem neunten Schritt 409 kann der erste Schritt 401 ausgeführt werden. Dabei kann es sich um eine Feed-Back Intervention, also um eine retrospektive Modellanpassung handeln.

Das anhand von Fig. 4 beschriebene Verfahren zur Ausreißererkennung und Intervention kann auf der Berechnung von Bayes Faktoren basieren.

Der erfindungsgemäße Ansatz ermöglicht die sichere Erkennung sprunghafter Veränderungen bis zu einer Sprunghöhe von $1{,}5 \cdot \sigma$ ($\sigma$ = Standardabweichung der Residuen). Bis zu einer Sprunghöhe von $1{,}0 \cdot \sigma$ können Veränderungen mit einer Detektionsrate von ca. 70-80% erkannt werden.

Bezüglich der Prognose liefert die Erfindung nicht nur eine Aussage über den Verlauf der Residuen, sondern belegt diese zusätzlich mit einer Wahrscheinlichkeitsdichte. Dadurch ist es möglich, zu jedem Zeitpunkt eine Aussage zu treffen, mit welcher Wahrscheinlichkeit statisch definierte Grenzwerte in der Zukunft überschritten werden.

Durch die Eigenschaft der Matrixnotation ist es ohne weiteren Aufwand möglich, die Dimension des verwendeten Dynamischen Linearen Modells zu erhöhen, und somit nicht nur lineare Trends zu beschreiben und vorherzusagen, sondern auch polynomische Trends höherer Ordnung. In diesem Fall wachst allerdings auch die Unsicherheit der Prognosen.

Das erfindungsgemäße Verfahren, die beschriebenen Algorithmen und die Berechnungen zum Lösen der beschriebenen Gleichungen können in Hardware oder in Software implementiert werden. Beispielsweise kann die Vorrichtung zur Überwachung einer Gasturbine entsprechende Schaltungen oder Prozessoren aufweisen. Der erfindungsgemäße Ansatz ist nicht auf die Überwachung einer Gasturbine beschränkt, sondern kann auch zur Überwachung anderer Turbinen oder Systeme eingesetzt werden.

**Patentansprüche**

1. Vorrichtung zur Überwachung einer Gasturbine, mit folgenden Merkmalen:

    einer Empfangseinrichtung (102) zum Empfangen von Zustandswerten (106) der Gasturbine; und einer Auswerteeinrichtung (104), die ausgebildet ist, um basierend auf der Methode der bayesischen Vorhersage, eine Zustandsinformation (108) aus den Zustandswerten der Gasturbine zu ermitteln, **dadurch gekennzeichnet, dass** die bayesische Vorhersage ein Beschreiben der Zustandswerte (106) durch mindestens ein Dynamisches Lineares Modell umfasst, wobei das Dynamische Lineare Modell ausgebildet ist, um mindestens einen polynomischen Trend höherer Ordnung der Zustandswerte (106) zu beschreiben.

2. Vorrichtung gemäß Anspruch 1, bei der die Auswerteeinrichtung (104) ausgebildet ist, um als Zustandsinformation (108) eine sprunghafte Veränderung der Zustandswerte (106) zu ermitteln.

3. Vorrichtung gemäß Anspruch 1 oder 2, bei der die Auswerteeinrichtung ausgebildet ist, um als Zustandsinformation (108) eine Prognose über einen zukünftigen Verlauf der Zustandswerte zu ermitteln.

**4.** Vorrichtung gemäß Anspruch 4, wobei das Dynamische Lineare Modell ausgebildet ist, um mindestens einen linearen Trend der Zustandswerte (106) zu beschreiben.

**5.** Vorrichtung gemäß einem der Ansprüche 1 oder 4, wobei die bayesische Vorhersage ein Bestimmen einer Wahrscheinlichkeitsdichte eines aktuellen Dynamischen Linearen Modells und ein Bestimmen der Wahrscheinlichkeitsdichte eines alternativen Dynamischen Linearen Modells umfasst, wobei ein Mittelwert des alternativen Dynamischen Linearen Modells gegenüber dem aktuellen Dynamischen Linearen Modell um einen bestimmten Wert verschoben ist.

**6.** Vorrichtung gemäß Anspruch 5, wobei die bayesische Vorhersage ein Vergleichen der Wahrscheinlichkeitsdichte des aktuellen Dynamischen Linearen Modells mit der Wahrscheinlichkeitsdichte des alternativen Dynamischen Linearen Modells umfasst.

**7.** Vorrichtung gemäß einem der Ansprüche 5 oder 6, wobei die bayesische Vorhersage ein Bestimmen von Bayes-Faktoren aus der Wahrscheinlichkeitsdichte des aktuellen Dynamischen Linearen Modells und der Wahrscheinlichkeitsdichte des alternativen Dynamischen Linearen Modells umfasst.

**8.** Vorrichtung gemäß einem der vorangegangenen Ansprüche, bei der die Auswerteeinrichtung ausgebildet ist, um die Zustandsinformation (108) durch einen Vergleich eines kumulativen Bayes-Faktor mit einem Schwellwert zu ermitteln.

**9.** Vorrichtung gemäß einem der vorangegangenen Ansprüche, wobei es sich bei den Zustandswerten um Messwerte der Gasturbine handelt.

**10.** Vorrichtung gemäß einem der vorangegangenen Ansprüche, wobei es sich bei den Zustandswerten um Residuen handelt, die jeweils eine Abweichung eines Messwertes von einem, dem Messwert zugeordneten Erwartungswert bestimmen.

## Claims

**1.** A device for monitoring a gas turbine, having the following features:

a receiver (102) for receiving status values (106) of the gas turbine; and an evaluator (104) which is designed to ascertain status information (108) from the status values of the gas turbine, based on the Bayesian forecasting method, **characterised in that** the Bayesian forecasting includes a description of the status values (106) by means of at least one dynamic linear model, wherein the dynamic linear model is designed to describe at least one higher-order polynomial trend of the status values (106).

**2.** A device according to claim 1, in which the evaluator (104) is designed to ascertain, as status information (108), a sudden change in the status values (106).

**3.** A device according to claim 1 or 2, in which the evaluator is designed to ascertain, as status information (108), a prognosis on a future course of the status values.

**4.** A device according to claim 4, wherein the dynamic linear model is designed to describe at least one linear trend of the status values (106).

**5.** A device according to one of claims 1 or 4, wherein the Bayesian forecasting includes a determination of a probability density of a currant dynamic linear model and a determination of the probability density of an alternative dynamic linear model, wherein a mean value of the alternative dynamic linear model is offset in relation to the current dynamic linear model by a specific value.

**6.** A device according to claim 5, wherein the Bayesian forecasting includes a comparison of the probability density of the current dynamic linear model with the probability density of the alternative dynamic linear model.

**7.** A device according to one of claims 5 or 6, wherein the Bayesian forecasting includes a determination of Bayes' factors from the probability density of the current dynamic linear model and the probability density of the alternative dynamic linear model.

8. A device according to one of the preceding claims, in which the evaluator is designed to ascertain the status information (108) by means of a comparison of a cumulative Bayes' factor with a threshold value.

9. A device according to one of the preceding claims, wherein the status values are measured values of the gas turbine.

10. A device according to one of the preceding claims, wherein the status values are residua, each of which determines a deviation of a measured value from an expected value associated with the measured value.

**Revendications**

1. Dispositif servant à surveiller une turbine à gaz, comprenant les caractéristiques suivantes :

   un système de réception (102) servant à recevoir des valeurs d'état (106) de la turbine à gaz ; et un système d'analyse (104) qui est réalisé pour déterminer, en se basant sur la méthode de la prédiction bayésienne, une information d'état (108) à partir des valeurs d'état de la turbine à gaz, **caractérisé en ce que** la prédiction bayésienne comprend une description des valeurs d'état (106) par au moins un modèle linéaire dynamique, le modèle linéaire dynamique étant réalisé pour décrire au moins une tendance polynomiale d'ordre supérieur des valeurs d'état (106).

2. Dispositif selon la revendication 1, dans le cadre duquel le système d'analyse (104) est réalisé pour déterminer, en tant qu'information d'état (108), une variation soudaine des valeurs d'état (106).

3. Dispositif selon la revendication 1 ou 2, dans le cadre duquel le système d'analyse est réalisé pour déterminer en tant qu'information d'état (108) un diagnostic concernant l'évolution future des valeurs d'état.

4. Dispositif selon la revendication 4, le modèle linéaire dynamique étant réalisé pour décrire au moins une tendance linéaire des valeurs d'état (106).

5. Dispositif selon l'une quelconque des revendications 1 ou 4, la prédiction bayésienne consistant à déterminer une densité de probabilité d'un modèle linéaire dynamique instantané et à déterminer la densité de probabilité d'un modèle linaire dynamique alternatif, une valeur moyenne du modèle linéaire dynamique alternatif étant décalée d'une certaine valeur par rapport au modèle linéaire dynamique instantané.

6. Dispositif selon la revendication 5, la prédiction bayésienne consistant en une comparaison entre la densité de probabilité du modèle linéaire dynamique instantané et la densité de probabilité du modèle linéaire dynamique alternatif.

7. Dispositif selon l'une quelconque des revendications 5 ou 6, la prédiction bayésienne consistant en une détermination de facteurs de Bayes à partir de la densité de probabilité du modèle linéaire dynamique instantané et à partir de la densité de probabilité du modèle linéaire dynamique alternatif.

8. Dispositif selon l'une quelconque des revendications précédentes, dans le cadre duquel le système d'analyse est réalisé pour déterminer l'information d'état (108) par une comparaison entre un facteur de Bayes cumulatif et une valeur seuil.

9. Dispositif selon l'une quelconque des revendications précédentes, les valeurs d'état étant des valeurs de mesure de la turbine à gaz.

10. Dispositif selon l'une quelconque des revendications précédentes, les valeurs d'état étant des résidus, qui déterminent respectivement un écart d'une valeur de mesure d'une valeur attendue associée à la valeur de mesure.

FIG 1

FIG 2

FIG 3

**401**

Informationsgleichungen anwenden

1-step Forecast Gleichungen anwenden

**402**

$t = tinter$ ——ja——>

**407**

1) m(t) = Mittelwert(Y(t*))
   wobei t* = tinter bis tnotice
2) erhöhe Wertvarianz R(t)

nein

**403**

$H(t) > \tau$ ——ja——>

**Potentieller Ausreißer**

1) als Ausreißer markieren
2) nächster Zeitschritt → t = t+1

**408**

nein

**404**

H(t) > τ und H(t-1) > τ
oder
L(t) > t und l(t) ≥ lmin

——ja——>

**Sprunghafte Veränderung**

1) Zeitpunkt berechnen → tinter = t-l(t)
2) Zeitpunkt merken → tnotice = t
3) Ausreißer demarkieren

**409**

nein

**405**

Updategleichungen anwenden

1) Systemgleichung
2) nächster Zeitschritt → t = t+1

——>

**1-step Forecast Gleichungen**
Prognose

**406**

Feed-back
Intervention

(retrospektive
Modellanpassung)

FIG 4

EP 2 277 087 B1

FIG 5

FIG 6

FIG 7

FIG 8

FIG 9

FIG 10

FIG 11

FIG 12

FIG 13

FIG 14

FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5105372 A
- FR 2883330

**In der Beschreibung aufgeführte Nicht-Patentliteratur**

- **HARRISON.** Applied Bayesian Forecasting and Time Seris Analysis. Chapman & Hall, 1994
- **HARRISON.** Bayesian Forecasting and Dynamic Models. Springer, 1997
- **HARRISON.** Monitoring and Adaptation in Bayesian Forecasting Models. *Journal of the American Statistical Association,* September 1986, vol. 81 (395
- **HARRISON.** Applied Bayesian Forecasting and Time Series Analysis. Chapman & Hall, 1994